# EUROPEAN PATENT APPLICATION

(11) **EP 4 837 469 A1**
(43) Date of publication of application: **11.11.2026**
(21) Application number: 24896806.7
(22) Date of filing: 15.10.2024
(51) Int. Cl.: A47J 31/56, G05D 9/00, G01F 23/00

(54) **ADVANCED METHOD FOR FILLING A PRESSURISED BOILER**

(30) Priority: 27.11.2023 ES 202330982
(71) Applicant: Crem International Spain S.L., 46701 Gandia (ES)
(72) Inventor: CANET PEIRÓ, Juan Antonio, 46013 Valencia (ES); SANCHEZ LLOPIS, Miguel, 46702 Gandia (Valencia) (ES); FERRANDO MORATAL, Javier, 46720 Villalonga (Valencia) (ES)
(74) Representative: Carlos Hernando, Borja
(86) International application number: PCT/ES2024/070623
(87) International publication number: WO 2025/114620

(57) **Abstract**

The present invention is for the industry for manufacturing machines for producing hot beverages and relates to a method that allows the filling of the boiler to be managed according to whether coffee is being dispensed, preventing disturbances in the supply of hot water from the boiler during the filling or loading thereof. In addition, microloads and/or fluctuations of state around the maximum level are prevented by means of a delay time for additional filling, managed by a control unit.

## Description

### Technical Field

The invention is for the industry for manufacturing machines for producing hot beverages.

### Background

The prior art includes documents that refer to the filling of a boiler. Document ES2228186A1, owned by MFM SL and entitled "Máquina de café exprés" ("Espresso coffee machine"), relates to a coffee machine that has one or more coffee dispensing units, one or more steam dispensers and one or more hot water dispensers. The machine has a control for the water level in the boiler by means of two probes, a maximum level probe and a minimum level probe. Document WO9423623A2, owned by SEATTLE ESPRESSO MACH CO, entitled "Espresso/cappuccino apparatus and method", discloses an espresso/cappuccino machine which has a unit for controlling the water level in the boiler by means of two probes, a minimum level probe and a maximum level probe, and a temperature probe. The filling of the boiler is controlled based on the water level and water temperature. Document CN1742660A, owned by JINUO INDUSTRY CO LTD, entitled "Water-level control device of Italian coffee-making machine and method", describes a water control device for an espresso machine which has three water level probes and the filling of which is based on four predetermined water levels. Document US2016150911A1, owned by BREVILLE R & D PTY LTD, entitled "Coffee machine with overflow feature", discloses an espresso machine which has a control unit for controlling the water level in the boiler by means of two or three water level probes. The water level in the boiler is controlled based on the water level, temperature and pressure in the boiler.

The applicant is not aware of any technical control solutions which, by having two level probes, perform this control according to the water level in the boiler and whether coffee is being dispensed, and which solve the problem described in an advantageous way as proposed by the invention.

### Object

The object of the invention is to provide simple and efficient means that manage the filling of the boiler according to the level in the boiler and whether coffee is being dispensed. Another objective is to prevent microloads and/or fluctuations of state around the maximum level by means of a delay time for additional filling, manged by a control unit. The invention also seeks to establish a safety protection, setting a maximum filling time that will block the dispensing and heating functions.

### Description of the Invention

Coffee extraction is a process in which many advances have been made by controlling the extraction processes and adapting the machines to them. An unresolved technical problem that causes disturbances in the supply of hot water from the boiler is its filling or loading, as the prior art does not take into account whether the machine is dispensing a coffee. Machines for making hot beverages such as coffee and/or infusions typically use a single pressurised boiler which has a heating element and typically two heat exchangers which are used to generate: water for infusions, steam for preparing beverages with milk, and water for coffee by means of the heat exchangers. To extract the coffee, a pressure of about 9 bar is used due to the restriction generated by the coffee puck, such that the typical flow rates range from 2.0 to 4.0 ml/s. If the boiler is filled or loaded during coffee extraction, there is an apparent drop in pump pressure, as loading the boiler usually requires a flow rate higher than the extraction standards mentioned above. Furthermore, it is common for several groups to be dispensing simultaneously, in addition to preparing an infusion. This situation means that the machine is unable to reach a pressure of 9 bar at the maximum flow rate. This drop in pressure can be seen on the pump pressure gauge and can also be visually observed in the way the coffee falls into the cup. This instability results in a misalignment of the extraction parameters and has a negative impact on the quality that dispensing seeks to achieve.

In order to provide a technical solution that solves the above problem, the invention describes an advanced method for filling a pressurised boiler with at least two heat exchangers, of the type used in machines for making hot beverages such as coffee and/or infusions. Partial filling or loading is defined as that carried out between the minimum and maximum levels of the boiler, while critical filling or loading refers to the minimum level.

The method is carried out in boilers that incorporate a pump and its corresponding control solenoid valve (boiler SV), a water level control with at least two probes, a maximum level probe and a minimum level probe, managed by a control unit. The method is as follows:
- Partial loading or filling: if the detected level corresponds to partially full, as interpreted by the control unit by means of the minimum and maximum level probes, and nothing is being dispensed, filling occurs by means of activating the pump, being able to reach the full state if the maximum level is detected; if a dispensing operation is activated during loading, the performed loading will stop immediately, allowing said dispensing without disturbances, maintaining the partially full state, such that after dispensing has ended, the control unit will try to resume loading, always stopping if another dispensing operation starts or reaching the full state, in which case when the maximum level is detected; the control unit considers a delay time for additional filling to prevent being right at the maximum level and to prevent microloads and/or fluctuations of state around the maximum level. If the full state is not reached without any dispensing operation that stops the process within a maximum pre-set filling time, for protection purposes, the control unit stops the partial loading and will indicate a filling error, providing a visual and/or acoustic indication of the type of error, furthermore blocking the dispensing and heating functions.
- Critical loading or filling: when the control unit interprets the signal from the minimum level sensor as active, it is determined that the boiler has a critical volume; as the heating element cannot be left "exposed" for safety reasons, loading and filling is carried out regardless of whether or not there is a dispensing operation during loading and filling, stopping only if the maximum level is reached, including the aforementioned delay for safety reasons. In the same way as in the partial filling process, if, when a loading process is performed from the critical minimum level, this process cannot be completed after a programmed maximum time has elapsed and the maximum level sensor does not return a detection signal, the control unit will stop the partial loading with a filling error, providing a visual indication of the type of error, furthermore blocking the dispensing and heating functions as this may indicate a problem in the circuit, such as a flow that is too slow, obstructions in the tubing, possible leaks, the mains tap has been turned off, or others.

### Description of the Drawings

To better understand what is described in the present specification, a set of process diagrams of the proposed invention is attached.

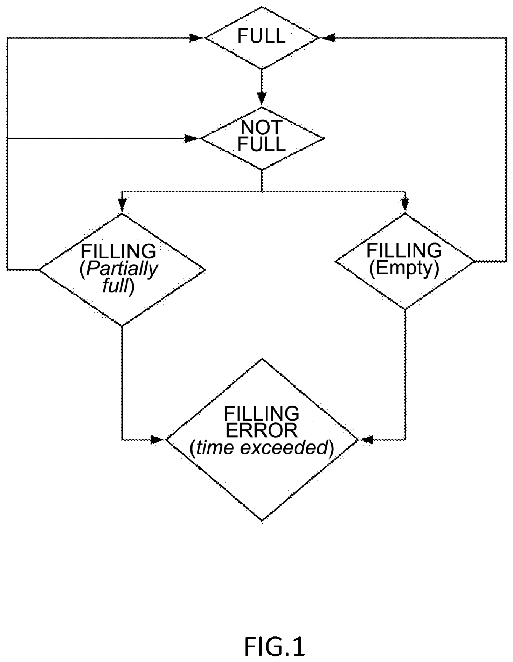

Figure 1 shows a diagram of the process which shows the filling error due to an exceeded time.
Figure 2 shows a diagram of the process considering the start of the filling operation from the minimum level.

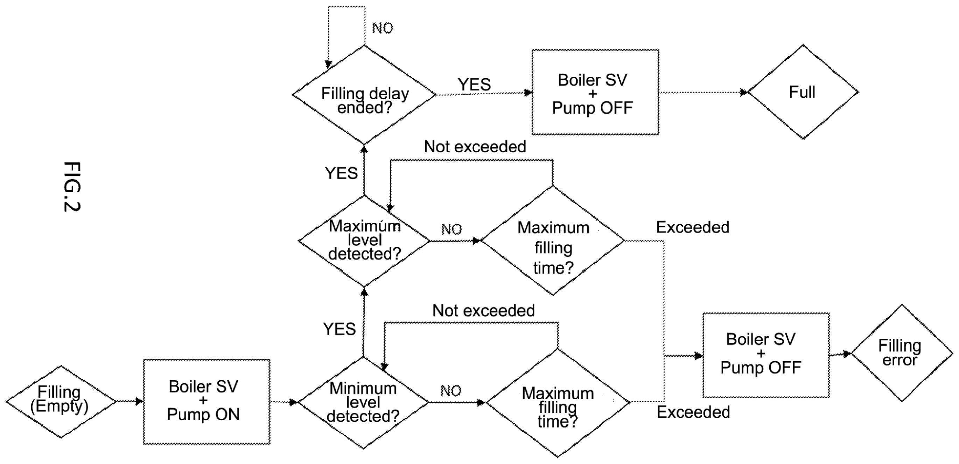

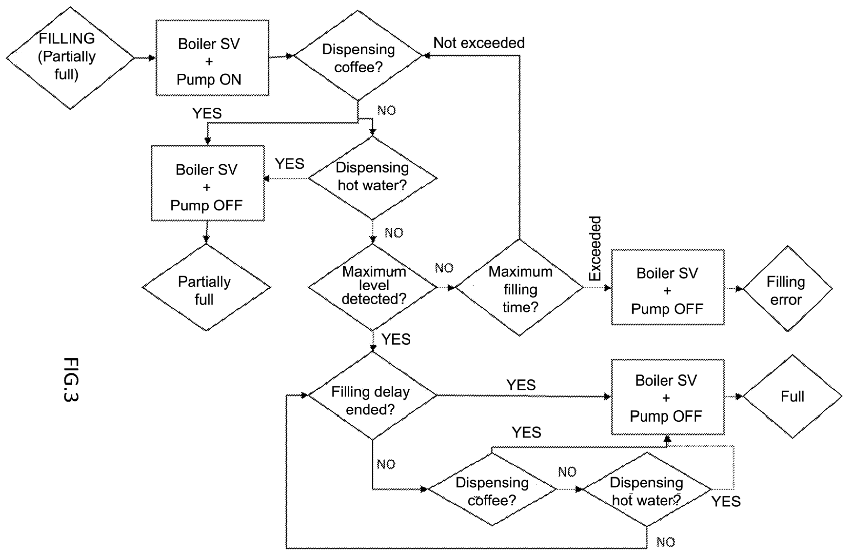

Figure 2 shows a diagram of the process considering the start of the filling operation in which the boiler is partially full (between the minimum and maximum levels).

### Description of a Preferred Embodiment

A preferred embodiment is cited by way of example, with the materials used in its manufacture, as well as the methods of application and all ancillary details that may arise, being independent of the object of the invention, provided that they do not affect its essential nature.

The preferred description which is the object of this specification includes the features of claim 1 and, for the sake of clarity, describes the method. This method is carried out, as explained above, in a machine for making hot beverages which has a heated boiler, as well as a pump, at least one heat exchanger, and at least two level sensors used to determine the maximum and minimum levels, the signals from which are interpreted by a control unit, as well as the means known and required in machines of this type.

The advanced method for filling a pressurised boiler thereby considers:
- Partial loading or filling: filling occurs by keeping the heat element and the pump switched on; if the detected level corresponds to partially full, as interpreted by the control by means of the minimum and maximum level probes, and nothing is being dispensed, filling occurs by means of activating the pump, being able to reach the full state if the maximum level is detected; if another dispensing operation is activated during loading, the performed loading will stop immediately allowing the dispensing without disturbances, maintaining the partially full state, such that after dispensing has ended, the control unit will try to resume loading, always stopping if another dispensing operation starts or reaching the full state, in which case when the maximum level is detected, the control unit considers a small delay time for additional filling to prevent being right at the maximum level and to prevent microloads and/or fluctuations of state around the maximum level. If the full state is not reached without any dispensing operation that stops the process within a maximum pre-set filling time, for protection purposes, the control unit stops partial loading with a filling error, providing a visual indication of the type of error, and furthermore blocking the dispensing and heating functions.
- Critical loading or filling: when the control unit interprets the signal from the minimum level sensor as active, it is determined that the boiler has a critical volume; as the heating element cannot be left "exposed" for safety reasons, loading and filling is carried out regardless of whether or not there is a dispensing operation during loading and filling, stopping only if the maximum level is reached, including the aforementioned delay for safety reasons. In the same way as in the partial filling process, if, when a loading process is performed from the critical minimum level, this process cannot be completed after a programmed maximum time has elapsed and the maximum level sensor does not return a detection signal, the control unit will stop the partial loading with a filling error, providing a visual indication of the type of error, furthermore blocking the dispensing and heating functions as this may indicate a problem in the circuit, such as a flow that is too slow, obstructions in the tubing, possible leaks, the mains tap has been turned off, or others.

## Claims

1. An advanced method for filling a pressurised boiler of the type having a heat element, a pump and its solenoid valve, heat exchangers, means for establishing minimum and maximum levels of the boiler, and a control unit, **characterised by** the following steps:
- Partial loading or filling: if the detected level of the boiler corresponds to partially full and nothing is being dispensed, filling occurs by means of activating the pump, being able to reach the full state if the maximum level is detected, or if another dispensing operation is activated during loading, the performed loading will stop immediately, maintaining the partially full state; after dispensing has ended, the control unit will resume loading, always stopping if another dispensing operation starts or if the full state is reached as determined by the maximum level probe, in which case, the control unit sets a delay time for additional filling; in the event that the full state is not reached without any dispensing operation that stops the process within a maximum pre-set filling time, for protection purposes, the control unit for partial loading or filling will indicate a filling error, providing a visual and/or acoustic indication of the type of error, furthermore blocking the dispensing and heating functions;
- Critical loading or filling: if the control unit interprets the signal from the minimum level sensor as active, it is determined that the boiler has a critical volume and loading and filling is carried out whether or not there is a dispensing operation during loading, stopping only if the maximum level is reached, including, for safety reasons, the delay time for additional filling; if, when carrying out a loading process the critical minimum level, this process cannot be completed after a programmed maximum time has elapsed and the maximum level sensor does not return a detection signal, the control unit will stop the loading with a filling error, providing a visual and/or acoustic indication of the type of error, furthermore blocking the dispensing and heating functions.
